(19) Europäisches Patentamt
European Patent Office
Office européen des brevets

(11) **EP 4 577 905 B1**

(12) **EUROPEAN PATENT SPECIFICATION**

(45) Date of publication and mention
of the grant of the patent:
**24.06.2026 Bulletin 2026/26**

(21) Application number: **23755444.9**

(22) Date of filing: **23.08.2023**

(51) International Patent Classification (IPC):
**G06F 7/499** *(2006.01)*        **G06F 7/523** *(2006.01)*

(52) Cooperative Patent Classification (CPC):
**G06F 7/5235; G06F 7/49942;** G06F 7/483

(86) International application number:
**PCT/EP2023/073098**

(87) International publication number:
**WO 2024/042113 (29.02.2024 Gazette 2024/09)**

(54) **METHOD FOR DESIGNING A DEVICE FOR A CRYPTOGRAPHIC APPLICATION**

VERFAHREN ZUM ENTWURF EINER VORRICHTUNG ZUR KRYPTOGRAPHISCHEN ANWENDUNG

PROCÉDÉ DE CONCEPTION D'UN DISPOSITIF POUR UNE APPLICATION CRYPTOGRAPHIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.08.2022 EP 22192305**

(43) Date of publication of application:
**02.07.2025 Bulletin 2025/27**

(73) Proprietor: **Belfort Labs BV**
**3000 Leuven (BE)**

(72) Inventors:
• **D'ANVERS, Jan-Pieter**
**3000 Leuven (BE)**
• **VAN BEIRENDONCK, Michiel**
**3000 Leuven (BE)**

(74) Representative: **Winger**
**Mouterij 16 bus 101**
**3190 Boortmeerbeek (BE)**

(56) References cited:
• SU YANG ET AL: "FPGA-Based Hardware Accelerator for Leveled Ring-LWE Fully Homomorphic Encryption", IEEE ACCESS, IEEE, USA, vol. 8, 10 September 2020 (2020-09-10), pages 168008 - 168025, XP011810425, DOI: 10.1109/ACCESS.2020.3023255

• SUJOY SINHA ROY ET AL: "FPGA-based High-Performance Parallel Architecture for Homomorphic Computing on Encrypted Data", vol. 20190220:174016, 14 February 2019 (2019-02-14), pages 1 - 12, XP061031839, Retrieved from the Internet <URL:http://eprint.iacr.org/2019/160.pdf> [retrieved on 20190214]

• SAMARDZIC NIKOLA NSAMAR@MIT EDU ET AL: "F1: A Fast and Programmable Accelerator for Fully Homomorphic Encryption", PROCEEDINGS OF THE 2021 IEEE/ACM INTERNATIONAL CONFERENCE ON ADVANCES IN SOCIAL NETWORKS ANALYSIS AND MINING, ACMPUB27, NEW YORK, NY, USA, 18 October 2021 (2021-10-18), pages 238 - 252, XP058901671, ISBN: 978-1-4503-9182-5, DOI: 10.1145/3466752.3480070

• ANONYMOUS: "lattice crypto - Why use negacyclic convolutions for polynomial multiplication instead of regular convolutions? - Cryptography Stack Exchange", 23 May 2022 (2022-05-23), XP093020682, Retrieved from the Internet <URL:https://crypto.stackexchange.com/questions/100249/why-use-negacyclic-convolutions-for-polynomial-multiplication-instead-of-regular> [retrieved on 20230203]

## Description

### Field of the invention

The present invention is generally related to the field of cryptography. More in particular, the invention relates to methods for designing devices for use in cryptographic applications.

### Background of the invention

In a context like, e.g., cloud computing users run a certain risk when uploading raw data to untrusted cloud servers. Therefore, it is required that sufficient security be provided to protect the users' data. A promising new technology that has emerged in the field of data security is Fully Homomorphic Encryption (FHE), which allows one to perform homomorphic computations on encrypted data (ciphertext) without learning further information about that data. In other words, it is not required to first decrypt the data. Methods to perform FHE have been improved over the years up to the point that practical application has become possible.

FHE algorithms are often executed on cloud compute servers. Computations are however slow. Typically, execution of a FHE scheme is bottlenecked by the multiplication operation. The ciphertext data on which computations are performed in a FHE scheme, are large polynomials (length N) from a certain scheme-dependent polynomial ring. Typical operations on these polynomials include addition and multiplication. While addition is linear in the length of the polynomial ($O(N)$ operations), multiplication has a quadratic cost ($O(N^2)$ operations) when using a generic straightforward technique, also known as schoolbook multiplication.

One of the main challenges in practical applications of FHE is its computational overhead. As one of the costliest operations of the FHE scheme is the multiplication, speeding up the multiplication operation may substantially contribute to a reduction of the computational overhead. This can be achieved by exploiting specific properties of the polynomials. Various well-studied algorithms are available to speed up such multiplication, including the Number Theoretic Transformation (NTT), Toom-Cook multiplication or Karatsuba multiplication. A multiplication using the NTT is generally the most efficient of these algorithms, but it also imposes the most stringent conditions on the polynomial ring used. As such it cannot be used for every FHE scheme.

FHE schemes typically use the NTT for fast polynomial multiplication when the underlying ring structure allows it. Two notable exceptions where the NTT is not applied, are the FHEW scheme as disclosed in the paper "FHEW: Bootstrapping homomorphic encryption in less than a second" (L. Ducas et al., Eurocrypt, pp. 617-640, 2015) and the TFHE scheme described in "TFHE: Fast Fully Homomorphic Encryption Over the Torus" (I. Chillotti et al., J.Cryptol. 33, 34-91, 2020). They both have a ring structure that prohibits the use of the NTT. Instead, these schemes can use Toom-Cook multiplication, Karatsuba multiplication or the Fast Fourier Transform (FFT) for fast polynomial multiplication, where typically FFT is the fastest option. The latter transformation is similar to the NTT transformation but has less stringent conditions on the polynomial ring. FHEW and TFHE both enable the use of homomorphic Boolean algebra, e.g. NAND, XOR and XNOR logic gates apart from homomorphic additions and multiplications.

FHE ciphertext include noise into the encryption for security purposes. Further, each FHE operation increases the noise present in the ciphertext. Additional FFT quantization noise can be tolerated to some extent. Quantization noise may arise from the fact that an FFT works with real numbers and is approximated with floating-point or fixed-point representations. FHE is tolerant to this noise as long as a certain threshold noise level is not exceeded. Therefore, a FHE scheme has to periodically invoke a bootstrapping operation to decrease the amount of noise in the ciphertext so that one remains below the threshold noise level. However, too much noise causes bootstrapping to fail, and as such, the use of the FFT requires very careful treatment.

Schemes like TFHE and FHEW bootstrap after every encrypted gate. Compared to earlier generation FHE schemes they feature much faster bootstrapping algorithms which additionally allow being programmed with an arbitrary function applied to the ciphertext. The encrypted gate computation (encrypted NAND, XOR, XNOR, ...) is heavily dominated by the expensive (Programmable) Bootstrapping ((P)BS) calculation. Therefore, there is a need for applying hardware acceleration to the bootstrapping.

PBS involves successively multiplying ciphertext data in a so-called "external product". This external product defines a multiplication between a General-LWE ciphertext and a General-GSW ciphertext. General-Learning With Errors (LWE) and General-GSW (Gentry, Sahai and Waters) are both fully homomorphic encryption schemes. Conceptually, a General-LWE ciphertext is a vector of k+1 polynomials; a General-GSW ciphertext is a matrix of (k+1)l x (k+1) polynomials. In TFHE, these polynomials are defined over the real Torus, i.e. their coefficients lie within the interval (0, 1]. In FHEW, these polynomials have integer coefficients.

The first step of the "external product" is to decompose each polynomial in the General-LWE ciphertext into *l* polynomials. Then, the external product in decomposed format, can be represented as a vector-matrix multiplication of polynomials. The output is again a General-LWE ciphertext.

$$\left(c_0(X)\ c_1(X)\ ...\ c_k(X))\right) \underset{1\times(k+1)}{} = \left(a_0(X)\ a_1(X)\ ...\ a_{(k+1)l-1}(X)\right) \underset{1\times(k+1)l}{} \times \begin{pmatrix} \mathcal{B}_{0,0}(X) & ... & \mathcal{B}_{0,k}(X) \\ & \ddots & \\ \mathcal{B}_{kl,0}(X) & ... & \mathcal{B}_{kl,k}(X) \end{pmatrix}_{(k+1)l\times(k+1)}$$

(1)

In this vector-matrix multiplication, the vector (the decomposed GLWE ciphertext) is of dimension $1\times(k+1)l$, the matrix (the General-GSW ciphertext) is of dimension $(k+1)l\times(k+1)$ and the output is of dimension $1\times(k+1)$. The variables k and l are cryptographic FHE parameters.

As already mentioned, an important feature of FHE applications is that they have inherent cryptographic mathematical noise present in ciphertext data. When ciphertext data is decrypted, the noise is rounded away and the correct result is retrieved. Similarly, the GLWE output ciphertext of the external product, $c(X) = (c_0(X), c_1(X), ..., c_k(X))$, contains cryptographic mathematical noise. A polynomial multiplication is efficiently computed using a Fast Fourier Transform (FFT). In this case, additional FFT quantization noise can be tolerated in $c(X)$ even in a cryptographic setting due to this inherent mathematical noise. The amount of tolerated noise depends on the cryptographic parameter set. For example, in the above-mentioned paper by I. Chillotti noise formulas are derived for the cryptographic noise present in $c(X)$.

Real numbers can be represented with finite precision in various ways. On a CPU, the typical method is to use floating-point numbers with single or double precision. The precision is defined by the size of the mantissa and the dynamic range by the size of the exponent. This approach is efficient due to the integration of a floating-point unit (FPU) in CPUs and it is therefore the typical representation-of-choice for software designers. Implementations of the above-mentioned TFHE and FHEW schemes have been restricted to double-precision floating point FFTs because single-precision FFTs were found to introduce too much noise. Double-precision floating-point FFTs have been found to keep the amount of introduced noise small enough. A fixed point representation is determined by the number of bits in the representation and by the scaling factor. In a fixed point representation the mantissa has a fixed number of bits.

In hardware, double-precision arithmetic is expensive to implement and thus preferably avoided if it is not absolutely required. A much cheaper alternative is fixed-point arithmetic. In state-of-the-art solutions a single representation is selected and used throughout the architecture. Further, the specific properties of input data in a cryptographic setting and specific requirements for the noise at the output have not been exploited so far.

In the paper "MATCHA: A Fast and Energy-Efficient Accelerator for Fully Homomorphic Encryption over the Torus" (L. Jiang et al., 59th Annual Design Automation Conference 2022, July '22, prepublished on the Internet on Feb.17, 2022) a hardware accelerator to process TFHE gates is presented that in terms of efficiency outperforms accelerators that frequently invoke expensive double-precision floating point FFT and IFFT kernels. In order to fully take advantage of the error tolerance capability of TFHE, polynomial multiplications are accelerated by using approximate multiplication-less integer FFTs and IFFTs requiring only additions and binary shifts. Although approximate FFTs and IFFTs introduce errors in each ciphertext, the ciphertext can still be correctly decrypted since the errors can be rounded off along with the noise during decryption. The integer representations can be seen as versions of a fixed-point representation that have been scaled to remove the decimal point.

Further, in the 'MATCHA' approach a single representation is selected for the FFT and IFFT. Verifying that the noise remains small enough is done by testing for a decryption failure over a number of tests. However, in the sequence of steps that make up a polynomial multiplication, using a single representation ignores the fact that each operation contributes differently to the output noise, depending on the data processed. Furthermore, matching the FFT noise with the mathematical external product noise allows for much more fine-grained noise control and optimisations than only testing for decryption failures.

Hence, there is room for improving methods for designing a device for use in a cryptographic application.

## Summary of the invention

It is an object of embodiments of the present invention to provide for methods for designing a device for performing a multiplication of polynomials in a cryptographic application wherein the specificity of data in cryptographic applications is taken into account and wherein a certain amount of flexibility is built in.

The above objective is accomplished by the solution according to the present invention.

In a first aspect the invention relates to a method for designing a device for performing a multiplication of polynomials in a cryptographic application. The method first divides the performance of the multiplication of polynomials over at least two interconnected data processing stages, wherein at least one data processing stage is arranged to receive an input operand to perform the multiplication and at least one data processing stage is arranged to provide an output signal of the multiplication. The method further comprises :

- defining for each data processing stage one or more parameters related to representation of data to be processed in that data processing stage,
- defining one or more constraints for the output signal of the multiplication,
- determining for each data processing stage individually a value for the one or more parameters whereby said one or more constraints are taken into account,
- applying the determined values for the one or more parameters in each of the data processing stages in the device for performing the multiplication of polynomials in the cryptographic application.

The proposed solution indeed allows for designing the various data processing stages of the device for performing a multiplication of polynomials so that each stage has its own, preferably optimized, set of parameters. The parameter set as determined allows, given the type of representation (e.g., fixed-point or floating-point), representing variables used when performing the multiplication in an optimal way whereby the one or more constraints on the output signal are met.

Preferably the input operand is a vector of polynomials. A second input operand is then a matrix of polynomials, that can be pre-computed into the FFT domain.

In a preferred embodiment the one or more parameters comprise one or more of {bit width, dynamic range, size of the integer part, size of the fractional part, location of decimal point}.

Advantageously the device is reconfigurable.

In one embodiment the method for designing a device comprises a step of splitting up the polynomial multiplication in a plurality of subtasks, whereby each data processing stage performs at least one subtask.

In an embodiment of the method said dividing over the at least two data processing stages depends on the hardware implementation of the device. In an advantageous embodiment the device has an architecture comprising a plurality of consecutive stages forming a pipeline. The device may then be applied in a Field Programmable Gate Array.

In a preferred embodiment a maximum noise level is taken as one of the constraints.

Advantageously, the multiplication of polynomials is part of a fully homomorphic encryption scheme.

In some embodiments the step of determining for each data processing stage individually the parameter values, is performed by means of simulations.

In embodiments of the method the step of determining for each data processing stage individually the value is performed by determining one or more properties of the data to be processed based on a model of noise sources affecting the one or more constraints on the one or more properties and/or on at least one property of an input to a subtask of the data processing stage.

In one embodiment one noise source may then stem from removing bits at the least significant bit side of an input of a subtask of the data processing stage. One noise source may stem from dropping bits at the most significant bit side of the input of a subtask of the data processing stage.

In some embodiments the multiplication of polynomials is performed using a negacyclic convolution.

In preferred embodiments the representation of data is a fixed-point representation.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures.

Fig.1 illustrates a block scheme of an accelerator structure on which the method of the invention can be applied.
Fig.2 illustrates an unfolded version of the block scheme of Fig.1.
Fig.3 illustrates the butterfly structure as commonly used in FFT implementations.
Fig.4 illustrates the split into subtasks and the additional building blocks for the intermediate variables in the third example.
Fig.5 illustrates a three step procedure to perform a multiplication.
Fig.6 illustrates a possible alternative architecture for the device.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a novel method to design a device for performing a multiplication of polynomials in a cryptographic application.

To achieve an efficient implementation of a multiplication of polynomials wherein an FFT operation is performed, one can capitalize on the above-mentioned feature that in an FHE scheme computations introduce a certain amount of noise into the ciphertext required for security. These schemes can therefore also tolerate approximate computations that include quantization noise. It is further to be noted that cryptography works with uniformly distributed random values, which limits the dynamic range of the coefficients that are computed upon. This makes it easier to predict the necessary bit representation range, i.e. the word lengths, needed to represent the coefficients. The noise tolerated by the FFT in a cryptographic application depends on a cryptographic parameter set rather than on application constraints. The cryptographic parameter set can be selected to tolerate either more or less noise. The inventors have realized that these insights offer opportunities to perform the multiplication in such a way that the intermediate variables applied when performing the operation have an optimized representation.

More in particular, the present invention presents a method to design a device for performing a multiplication of polynomials in a cryptographic application. In the method the multiplication is first divided into at least two data processing stages, to be implemented with optimized data representations. Next, one or more parameters are established determining how to represent variables that are used in the data processing stages when performing the multiplication in the cryptographic application. While mathematical descriptions of algorithms to execute such an operation typically presume infinite precision of the variables, hardware implementations (just as software implementations) need to decide on specific types of representation of variables, such as fixed point, floating point, block-floating point, and on the precision of the selected representations. This choice has an influence on the cost of the implementation and on the accuracy.

Once a choice for the representation type of each variable is made, one still has to decide on the exact parameters of this representation. For example, for a fixed-point representation one needs to decide on the least significant bit (LSB) and most significant bit (MSB) that are represented. A floating-point representation is parameterized by the smallest and largest possible values (hence, the bit size (word length)) of both the mantissa and the exponent. The MSB value, for example, characterizes whether overflow may occur or not.

By way of example, the parameterization of the MSB and the LSB are illustrated by the following. Assume a value $a$ with 8 integer bits and 16 fractional bits, and a value b with 4 integer bits and 8 fractional bits. The full-precision result $c = a \times b$ then has 8+4=12 integer bits and 16+8=24 fractional bits. In this case one can say the MSB of c is at position 12 and the LSB is at position -24. In an implementation, a parameterization is performed for variable c : $MSB_c$ and $LSB_c$. By cutting off bits at the MSB, i.e. performing a rescaling, (e.g. choosing $MSB_c = 11$), one allows a certain probability of overflow $P_{overflow}$. This value depends on the distribution of the values $a$ and $b$, and in practice all MSBs are set such that, for example, $P_{overflow} < 2^{-64}$. By cutting off bits at the LSB side, some noise due to quantization is introduced, which adds to the output noise. Note that instead of cutting off any form of rounding can be considered.

Importantly, the representation of variables influences the cost of the implementations, as a bigger range of possible values entails more computational cost, but also leads to an implementation with higher accuracy. For a typical implementation, one will have design constraints on the accuracy of the output variable(s). These constraints are known upfront and, for example, can take the form of a maximal noise variance introduced or a maximal probability (e.g. $2^{-20}$ or $2^{-40}$) of having a variable overflow, without being limited thereto. The goal is to determine parameters that allow for an efficient implementation, while fulfilling said design constraint(s) for the output signal.

A generic overview of the proposed approach is now provided, which is applied on an algorithm to be implemented in the device to perform a multiplication of polynomials on an input operand in a cryptographic application. The polynomial multiplication operation is split up in a plurality of subtasks. The device according to this invention comprises at least two data processing stages that are interconnected. Each data processing stage performs at least one subtask. At least one data processing stage is configured to receive the input operand for performing the multiplication. At least one data processing stage is configured to provide an output signal representing the result of the multiplication of polynomials. Any subtask that does not generate an output of the multiplication operation produces a variable which is called in this description an intermediate variable. Any intermediate variable is next used as an input to one or more subsequent subtasks. The input operand may contain one of the variables to be multiplied or both (all) variables. For example, when performing a multiplication of two variables, the two variables may form the input operand. In advantageous embodiments the input operand is a vector of polynomials. One or more constraints are imposed on certain properties of the resulting output of the operation (e.g., a maximum on the variance of the noise introduced). The goal is to determine efficient parameters of the representation of intermediate variables in the implementation and of the output variable.

On a high level, the design method of this invention comprises the following main steps. For each data processing stage of the device one or more parameters are defined that relate to the way data to be processed in that stage (i.e., the intermediate variables) is represented. Also one or more constraints are defined that the output of the polynomial multiplication operation has to meet. In a next step for each data processing stage individually specific values are determined for each parameter of the representations, so that all constraints are fulfilled. Preferably, the values for these parameters are determined in an optimal way, that is, according to an appropriate optimization function. The parameter values are then used in each of the data processing stages of the device to implement the multiplication of polynomials in the device.

A preferred way to determine the parameter values for each data processing stage is the following. One or more properties are determined of a variable output by one of the subtasks of the data processing stage being considered. These properties of the variable may be based on a model of the noise source(s) affecting the one or more constraints on the properties of the signal output by that one subtask and/or on at least one property of an input to said one subtask. The model is built in function of parameters of the representation(s) to be determined. This is repeated for all intermediate variables of all the data processing stages as well as for the output variable. For each data processing stage specific values are determined for each parameter of the representations, so that the one or more properties fulfil all constraints. The parameter values as determined are then used in the respective data processing stages in the device for performing the multiplication of polynomials.

Building the model of noise sources can be performed as follows. The algorithm performing the multiplication is split into various subtasks and the intermediate variables are identified. For each subtask the input-output behaviour of the properties with respect to the constraints (e.g., the noise introduced, the scaling factor of the input to the output, ...) is determined. For each of these variables the type of representation (i.e., fixed point, floating point, ...) is chosen. The parameters of this representation (like, e.g., highest representable value, lowest representable value, ...) are still undetermined and are initially left as symbolic variables, i.e., as variables without a specific value yet.

To analyse the execution of the algorithm, one makes use of an extra building block which is introduced in the scheme of the multiplication at the place of each intermediate variable. This building block represents the effect of the limited precision of the representation of the variable but has no effect on the algorithm itself. To achieve this, the extra building block has an input-output behaviour that links the symbolic parameters with the imposed constraints.

The algorithm is stepped through from input to output and the model is built up for each constraint. For this, one or more relevant properties at the input of the subtasks or of the input operand are determined (e.g., noise variance, input variance, biggest possible value, ...) and these properties are then propagated to the output. For each subtask the input-output behaviour is used to transform the input properties to the corresponding output properties. As a result, one obtains for each constraint a model of the property of the variable on which a constraint is imposed in function of the symbolic parameters.

In a next step of the method values are determined for each of the symbolic parameters, so that the constraints are fulfilled. Preferably, these values are selected such that the implementation cost is as low as possible. One way to achieve this is to select a cost function for each symbolic parameter, that models the implementation cost for given values of this parameter. A solution can then be found by solving an optimization problem wherein one determines a value that reduces, and preferably minimizes, the overall cost function while adhering to all constraints.

Finally, the selected values for the parameters as determined are applied to instantiate the design of the respective data processing stages of the device for the cryptographic application.

In other embodiments the tuning of the data representations can be performed by means of simulations. In these embodiments, it is assumed that each computational stage contributes independently to the output noise. First, each computational stage is implemented with very high precision, leading to negligible output noise. Next, a single stage is tweaked (e.g., reducing the bit width of a fixed-point representation), and the resulting output noise is measured and compared to the high-precision case. At a certain threshold bit width, the output noise due to the tweaked stage comes close to the tolerated output noise (e.g., within X bits). This threshold bit width is then considered the "optimum" bit width for this particular stage. This is repeated until a threshold bit width is determined for each particular stage. Finally, each stage is implemented with its threshold bit width, and the total output noise is measured for all stages collectively. If this output noise exceeds the tolerated output noise, then the whole process is repeated for a larger threshold bit width (i.e., the tolerance of X bits is increased).

In another embodiment, the tuning of data representation happens in a similar way, except that a cost function is assigned to each of the tuned stages. Stages that have a higher computational cost are first tuned to their minimum bit width. Subsequently, following stages are tuned while keeping the costly stage at the tuned bit width. This way, the costly stage is implemented with the absolute minimum precision, at the cost of the other stages being implemented with higher precision.

An example is now presented wherein the proposed approach is demonstrated to design a hardware architecture to accelerate the vector-matrix multiplication as given in the above-mentioned equation (1). The architecture makes use of FFT blocks to accelerate the polynomial multiplication.

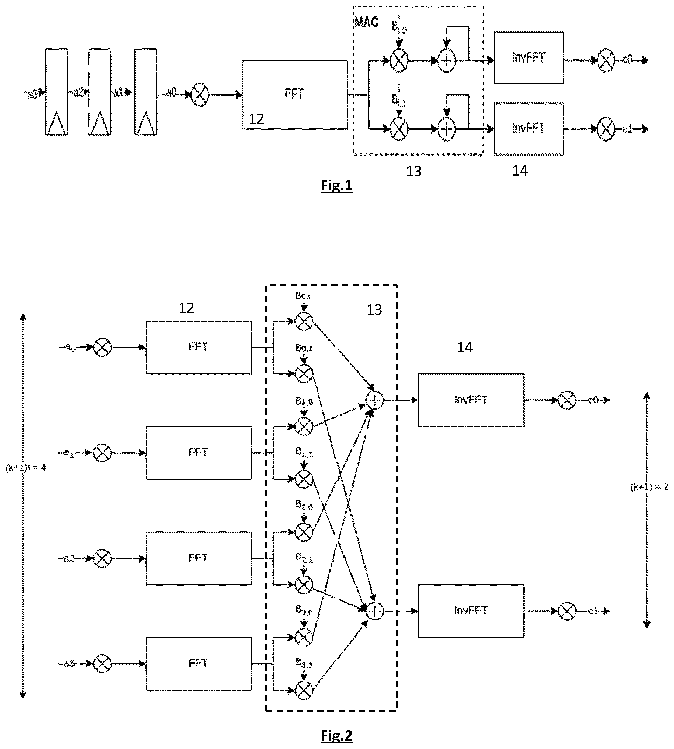

A block scheme of an advantageous accelerator structure is presented in Fig.1. The architecture has clear resemblances to a streaming DSP processor architecture with large fully-pipelined, directly cascaded computational stages and heavily simplified control logic. The accelerator is conceived to achieve maximum throughput/area, with maximally unrolled arithmetic units, eliminating control logic and hard-coded routing paths.

The acceleration of the polynomial multiplication can be achieved through the convolution theorem :

$$c = a \times b = IFFT\big(FFT(a) \cdot FFT(b)\big) \qquad (2)$$

Equation (1) is repeated here :

$$\big(c_0(X)\ c_1(X)\ ...\ c_k(X))\big)_{1\times(k+1)} = \big(a_0(X)\ a_1(X)\ ...\ a_{(k+1)l-1}(X)\big)_{1\times(k+1)l} \times \begin{pmatrix} \mathcal{B}_{0,0}(X) & ... & \mathcal{B}_{0,k}(X) \\ & \ddots & \\ \mathcal{B}_{kl,0}(X) & ... & \mathcal{B}_{kl,k}(X) \end{pmatrix}_{(k+1)l\times(k+1)}$$

whereby $c = [c_0\ c_1\ ...\ c_k]$ and $a = [a_0\ a_1\ ...\ a_{(k+1)l-1}]$ denote vectors of polynomials of dimension $1\times(k+1)$ and $1\times(k+1)l$, respectively, and B a matrix of polynomials of dimension $(k+1)l\times(k+1)$. FFT-based multiplication works according to Equation (2), by converting the input polynomials $[a_0\ a_1\ ...\ a_{(k+1)l-1}]$ into another representation using the FFT. In this domain the multiplication operation with polynomials $B_{i,j}$ (which are pre-computed in the FFT domain) can be performed pointwise (N operations per pair in Equation (2)). The accumulation step of the vector-matrix product is preferably executed in FFT-domain. Afterwards, the result needs to be converted back to the initial representation using the inverse FFT (IFFT). The FFT and IFFT conversion operations are typically the most expensive operations of the FFT-based multiplication requiring O(N.log(N)) operations, with N the number of coefficients in the polynomials. The number of coefficients determines the FFT depth and width.

An FFT-based multiplication operates on complex numbers, with both the real and imaginary part being real numbers, whereas other multiplication algorithms use integers. When a finite precision is used to represent real numbers, the computation of a multiplication is not always exact and can be noisy, i.e. a small error $\delta$ could be introduced :

$$FFT^{-1}\big(FFT(a).FFT(b)\big) = c + \delta$$

As already said a certain level of noise introduced by the FFT can be tolerated in FHE apart from the (mathematical) noise already present in the equations for security. This means that the magnitude of the noise $\delta$ needs to be considered very carefully. Implementations of FHE impose tight restrictions on the introduced noise. If too much noise is introduced by the FFT into the polynomial multiplication, computations fail and return an incorrect result.

Fig.2 shows an unfolded version of the exemplary accelerator hardware architecture with a pipeline structure depicted in Fig.1. Such an architecture is advantageously applied in a Field Programmable Gate Array (FPGA). The matrix input $B_{i,j}$ in Equation 1 can be pre-computed in the FFT-domain. As also can be seen from Fig.1 and Fig.2, the inputs $B_{i,j}$ are available in FFT domain. The FFT component (12) computes the FFT of the vector $a$ applied to the input of the structure. A Multiply-Accumulate (MAC) component (13) accumulates the components of the point-wise operations in the FFT domain. An inverse FFT component (14) is provided to put the output vector back from the FFT domain. In Equation 1, there are (k+1).l forward FFTs, and (k+1) inverse FFTs, hence these blocks require different throughputs. All the blocks are connected as a pipeline as already mentioned.

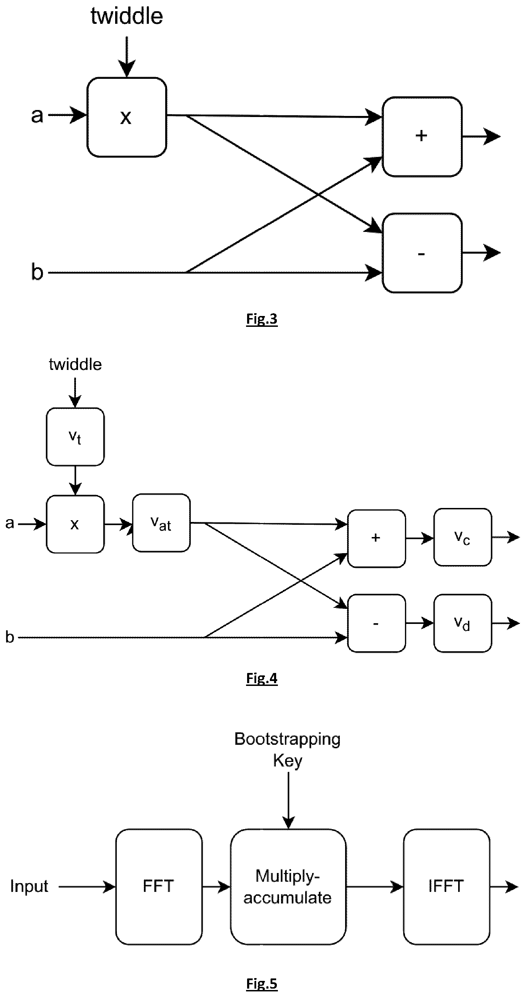

As can be seen from Fig.1 and Fig.2, the architecture can be divided into a number of stages (functional blocks). There is the FFT block, the MAC block, and the inverse FFT blocks. Within each of these blocks there may be multiple stages as well. The MAC has a multiply stage, and an add stage. The multiply itself is a complex multiplier (out = (a+b.j) (c+d.j)), which again has stages. Each stage has certain data representation parameters, such as (fixed-point, floating-point, number of bits, rounding mode), which affects the noise present in the output c (c=c0, c1). The FFT block has $\log_2(N)$ stages of 'butterfly' units. These butterfly units perform a butterfly operation, which is an important part of the FFT transformation. Fig.3 depicts a diagram of a butterfly operation. The butterfly operation with its two inputs and two outputs is well-known in the implementation of an FFT algorithm and, in general, recursively breaks down a discrete Fourier Transform of composite size $N = rm$ into $r$ smaller transforms of size $m$ where $r$ is the radix of the transform. These smaller DFTs are then combined via size-$r$ butterflies, which themselves are DFTs of size $r$ (performed $m$ times on corresponding outputs of the sub-transforms) pre-multiplied by roots of unity known as twiddle factors.

As FHE applications have inherent cryptographic mathematical noise present in polynomial $c$ and given that extra FFT-based rounding noise can be tolerated, different data representations are possible for each of the stages in the architecture of Fig.2. The available room for some extra noise allows for the use of different bit widths, rounding modes, fixed-point formats etcetera. This holds for each of the stages in the architecture.

Various ways are available to determine a data representation for each stage. Each of these methods starts from a property of the output signal (vector c(X) = (c0(X), c1(X)), e.g., the maximum tolerated level of noise, derived from the mathematical formulations of the noise present in the considered FHE scheme. Apart from the maximum noise level, other constraints may be imposed, e.g., related to the overflow. In practice the maximum tolerated level of noise is always one of the constraints.

The variables in the fast Fourier transformation, and thus also in the butterfly operations, are complex numbers. However, it is typically possible to assume the distribution and properties of the real and imaginary part are the same. In such a scenario, one can focus in the analysis on the properties of the real part only.

In the example considered here only a maximal noise variance constraint is imposed on each butterfly structure. The goal is, for example, to select a value for the position of the least significant bit (LSB) of each intermediate variable. The LSB and variances of the noise and the signal are taken as the relevant properties. After dividing the algorithm into subtasks, additional building blocks are added to the scheme for intermediate variables $v_{at}$, $v_c$, $v_d$ as depicted in Fig.4. These blocks model the inaccuracies due to the limited range of the representation. A model is built of the noise introduced due to cutting off the least significant bits for example, by assuming that the LSB bits that are cut off, are independently uniformly distributed.

The multiplication subtask in the butterfly operation can be simplified by exploiting knowledge of the twiddle input properties. An interesting property of any twiddle factor t with real part $t_{real}$ and imaginary part $t_{imag}$ is that $t_{real}^2 + t_{imag}^2 = 1$. Given a number x with a same variance of the real and imaginary part, a multiplication of x with a twiddle factor t does not change the variance, i.e. var(x.t) = var(x). This can readily be derived as follows:

$$\text{var}\left(\text{real}\left((x_{real} + i \cdot x_{imag}) \cdot (t_{real} + i \cdot t_{imag})\right)\right)$$
$$= \text{var}\left(x_{real} \cdot t_{real} - x_{imag} \cdot t_{imag}\right)$$
$$= t_{real}^2 \cdot \text{var}(x_{real}) + t_{imag}^2 \cdot \text{var}(x_{imag})$$
$$= \text{var}(x_{real}),$$

For the multiplication the input-output behaviour can thus be described as $LSB_{xt} = LSB_x + LSB_t$ and $\sigma^2_{noise,out} = \sigma^2_{noise,x} + \sigma^2_x \sigma^2_{noise,t}$ (under the assumption that the input has zero mean). The input-output behaviour of the addition block where variables *in1* and *in2* are added, is given by :

$$LSB_{out} = \min(LSB_{in1}, LSB_{in2}) \text{ and } \sigma^2_{noise,out} = \sigma^2_{noise,in1} + \sigma^2_{noise,in2}$$

The model can then be computed by starting from the twiddle input, which has reduced accuracy due to the finite representation (except for twiddles 1 and -1 and i and -i). Symbolic parameters are put in bold to distinguish them from the other parameters or properties.

$$LSB = \mathbf{LSB_t}$$

$$\sigma^2 = 1$$

$$\sigma^2_{noise} = 2^{2\mathbf{LSBt}}/12$$

After the additional building block for intermediate variable $v_{at}$ one thus obtains for the real part of the product:

$$LSB = \mathbf{LSB_{at}}$$

$$\sigma^2 = \sigma^2_a$$

$$\sigma^2_{noise} = \sigma^2_{noise,a} + 2^{2\mathbf{LSBt}}/12 * \sigma^2_a + \text{ramp}(2^{2\mathbf{LSBat}} - 2^{2(LSBa)})/12$$

For the imaginary part similar expressions result. The ramp() function returns a 0 for negative input values and returns the input value for positive input values. The reason for having this function is that additional noise is only present if there are relevant bits discarded, which happens if $\mathbf{LSB_v} < LSB_{in}$.

After the additional building block for intermediate variable $v_c$ one can write :

$$LSB_{out} = LSB_c$$

$$\sigma^2_c = \sigma^2_a + \sigma^2_b$$

$$\sigma^2_{noise,out} = \sigma^2_{noise,c} = \sigma^2_{noise,a} + 2^{2\mathbf{LSBt}}/12 * \sigma^2_a + \sigma^2_{noise,b}$$
$$+ \text{ramp}(2^{2\mathbf{LSBat}} - 2^{2(LSBa)})/12 + \text{ramp}(2^{2\mathbf{LSBc}} - 2^{2\min(LSBat, LSBb)})/12$$

Next the values of the symbolic parameters are determined. The parameters should now each be fixed to a value so that the constraint $\sigma^2_{noise,out} \leq \sigma^2_{maxnoise}$ is fulfilled. One way to do this is to construct a cost function, for example a function where all parameters are costed equally according to their bit width. Efficient parameter values can then be found using an optimizer that optimizes the cost function under the given constraint. In some embodiments it is of course possible to change the cost function to a function that more closely represents the implementation costs.

It is to be noted that also for a simple computation like an addition, as performed e.g. in the MAC stage, an approach using a model as outlined above, can be applied. Again, the input-output behaviour is first described. Once this is done, one can go through the model from start to end to determine the properties relevant to the constraints in function of the symbolic parameters. The intermediate calculations at the various nodes can then be written down. Next the values of the symbolic parameters are determined. The constraint function $\sigma^2_{noise,out} \leq \sigma^2_{maxnoise}$ is derived. The parameters are each fixed to a value so that this constraint is fulfilled.

The polynomial multiplication using FFT as discussed in the example above can also be seen as a computation of the inner product between the input (being a vector of polynomials) and a bootstrapping key (also a vector of polynomials). To efficiently process such a multiplication, one might use a three-step procedure: an FFT, coefficientwise multiplication and accumulation, and an inverse FFT. Such a procedure is depicted in Fig.5. Note that contrary to typical FFT-based multiplications, the second multiplication term (i.e., the bootstrapping key) does not undergo an explicit FFT operation in the figure. This is because the input is known beforehand (as was already indicated w.r.t. matrix b in equation (1) above) and the FFT can thus be precomputed with very high accuracy, which implies this specific FFT does not need to be taken into account.

First the multiply-accumulate operation is considered. This operation is performed coefficientwise and can thus be modelled using multiplication and addition operations similar as discussed in the example above. As already mentioned, the FFT and inverse FFT operation mainly comprise of several layers of butterfly operations. Therefore, applying the analysis of the example above on these butterflies yields a model of the FFT and IFFT operations. In some embodiments of the polynomial multiplication the implementation may use a different type of butterfly operation (radix-2, radix-4, ...), but the analysis of these butterflies can be done in a way similar to the analysis in the example above. By combining the previously discussed building blocks, one can construct a noise model of the full FFT based polynomial multiplication.

One challenge is the substantial number of operations, and thus the substantial number of parameters, that need to be determined. To reduce the number of parameters in the model one might group similar parameters together. In this example, there is a high degree of parallelism and structure that can be used to this end. One might for example combine similar parameters of variables that are in the same 'layer' of the FFT (i.e., variables that have undergone the same number of butterfly operations) or the variables after the multiplication operation in the multiply-accumulate. This would reduce the number of parameters from roughly $O((V+1)N/2\log2(N/2))$, with V the vector length and N the number of coefficients in the polynomials, to about $O(2\log2(N/2))$ as this is approximately the number of layers in the proposed algorithm.

Further, it is to be noted that typical cryptographic applications like FHE require performing a negacyclic convolution rather than a conventional cyclic convolution. In the cyclic convolution (with N coefficients), coefficients that are out of bounds (at position i>N) are cycled around to the first coefficients (at position i-N). In the negacyclic convolution on the contrary, these coefficients are not only cycled around, but also negated. To achieve this, many implementations of cryptographic algorithms perform a so-called twist-and-fold step at the start and at the end of the algorithm, which accounts for the negacyclic behaviour. These steps can be seen in Figs.1 and 2 : they are represented by the multiplications before the FFT and after the IFFT, respectively. This twist-and-fold step comprises an extra packing of the input and a multiplication with a complex number (the twiddle factor). The packing takes two integers a, b and combines them into a complex number a + bi. This operation typically does not produce any noise. The additional multiplication operation can be modelled using the approaches as described previously. The postprocessing after the IFFT is the inverse operation. The negacyclic convolution may be performed in a separate data processing stage.

As already mentioned, one has to select a type of representation for the variables. In an FFT scheme for performing polynomial multiplication as considered in this invention, a fixed-point representation is advantageously selected. The above-described approach can then be applied to determine the parameters of the fixed-point representation of the variables that occur when the device performs the operation, while the imposed constraints are met.

Given the optimal parameters obtained as described, a device, e.g., a hardware circuit, can be constructed with fixed-point arithmetic for these parameters. In practice, it may be advantageous to have a library of parameterized hardware circuit implementations, where the fixed-point bit widths are generic parameters. A circuit can be chosen to match the input types, and these parameters are set at "circuit-synthesis time" to match the required output noise $\delta$.

As already mentioned above, an alternative way to determine the parameter values is by means of performing simulations. Concretely, this might look as follows. Like in the example above, the computation is first divided into a set of processing stages, together with parameters that determine the data representation. For example, the data processing stages could be selected as the higher-level operations, e.g., forward FFT, MAC, and inverse FFT. The parameters follow from the selection of the stages, e.g., a = forward FFT bit width, b = MAC bit width, c = inverse FFT bit width. First, the architecture is simulated with very large bit widths for a, b, and c, leading to negligible output noise variance $\sigma^2_{noise,out} \ll \sigma^2_{maxnoise}$. Next, a cost function is assigned to the parameters 'a', 'b', and 'c'. A simple cost function is applicable here: since there are more forward than inverse FFT (Fig.1), a higher cost is assigned to 'a' than to 'b'. Further, since the inverse FFT operation is more costly than the MAC operation, a higher cost is assigned to 'b' than to 'c'. Next, the output noise is simulated by sweeping the mostly costly parameter, 'a', first. One decreases 'a', up to the point that $\sigma^2_{noise,out} \approx \sigma^2_{maxnoise}$. This is considered the minimal value for 'a'. A small margin is taken into consideration, e.g., one selects 'a' to be 1 bit larger than the minimal value and proceeds similarly with the next parameter 'b'. This process is repeated until values have been found for all parameters.

Given the optimal parameters, the device (e.g., hardware circuit) can be simulated with the obtained parameter set. the output noise $\delta$ is measured, and the output noise can be compared to a floating-point reference implementation. The output noise is verified to meet the noise bounds (e.g., standard-deviation 2) determined above. An FPGA bitstream can be created for the circuit with the optimal fixed-point parameter set determined in the method as presented above. The FPGA bitstream allows accelerating the FHE bootstrapping procedure, which involves many (thousands) iterations of polynomial-vector multiplication.

In a first preferred example, the architecture is implemented as depicted in Fig.1. Resembling a streaming DSP processor, the architecture has fully pipelined units that are directly cascaded. Data streams from one processing stage to the next. It is an object of the invention to implement each data processing stage with a different optimized data representation. Advantageously, in a streaming architecture, conversions between data representations can be hardwired in the dedicated connections between streaming processing stages. Moreover, this architecture has simplified control logic. It is conceived for maximum throughput/area, with maximally unrolled arithmetic units, eliminating control logic and hard-coded routing paths.

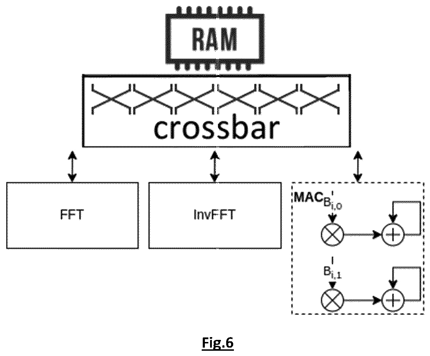

Another example of an architecture that can be considered is depicted in Fig.6 (based on Matcha). In this embodiment the architecture resembles a more classical CPU, with a central memory file and connected arithmetic processing units. In the structure of Fig.6, the computing components (FFT, MAC, inverse FFT) can be connected to a memory file by means of crossbars. As in the previous example a suitable data representation is to be determined for each stage of the structure, i.e., for the FFT block, the various MAC blocks and the inverse FFT. Moreover, the central memory can be considered a separate write-back stage, and its implementation and data representation can be optimised similarly.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for designing a device for performing a multiplication of polynomials in a cryptographic application, the method comprising :

   - dividing the performance of said multiplication of polynomials over at least two data processing stages of said device, wherein at least one data processing stage is arranged to receive an input operand to perform said multiplication and at least one data processing stage is arranged to provide an output signal of said multiplication,
   - defining for each data processing stage one or more parameters related to representation of data to be processed in that data processing stage,
   - defining one or more constraints for said output signal,

   **characterized by**

   - determining for each data processing stage individually a value for said one or more parameters whereby said one or more constraints are taken into account,
   - applying the determined values for said one or more parameters in each of said data processing stages in said device for performing said multiplication of polynomials in said cryptographic application.

2. Method for designing a device as in claim 1, wherein said input operand is a vector of polynomials.

3. Method for designing a device as in claim 1 or 2, wherein said one or more parameters comprise one or more of {bit width, dynamic range, size of the integer part, size of the fractional part, location of decimal point}.

4. Method for designing a device as in any of the previous claims, wherein said device is reconfigurable.

5.  Method for designing a device as in any of the previous claims, comprising a step of splitting up said multiplication in a plurality of subtasks, whereby each data processing stage performs at least one subtask.

6.  Method for designing a device as in any of the previous claims, wherein said device has an architecture comprising a plurality of consecutive stages forming a pipeline.

7.  Method for designing a device as in claim 6, wherein said device is applied in a Field Programmable Gate Array.

8.  Method for designing a device as in any of the previous claims, wherein a maximum noise level is taken as one of said constraints.

9.  Method for designing a device as in any of the previous claims, wherein said multiplication of polynomials is part of a fully homomorphic encryption scheme.

10. Method for designing a device as in any of the previous claims, wherein said step of determining for each data processing stage individually said value for said one or more parameters is performed by means of simulations.

11. Method for designing a device as in any of claims 1 to 9, wherein said step of determining for each data processing stage individually said value is performed by determining one or more properties of said data to be processed based on a model of noise sources affecting said one or more constraints on said one or more properties and/or on at least one property of an input to a subtask of the data processing stage.

12. Method for designing a device as in claim 11, wherein one noise source stems from removing bits at the least significant bit side of an input of a subtask of said data processing stage.

13. Method for designing a device as in claim 11 or 12, wherein one noise source stems from dropping bits at the most significant bit side of said input of a subtask of said data processing stage.

14. Method for designing a device as in any of the previous claims, wherein said multiplication of polynomials is performed using a negacyclic convolution.

15. Method for designing a device as in any of the previous claims, wherein said representation of data is a fixed-point representation.

**Patentansprüche**

1.  Verfahren zum Entwerfen einer Vorrichtung zur Durchführung einer Multiplikation von Polynomen in einer kryptographischen Anwendung, wobei das Verfahren umfasst :

    - Aufteilen der Leistung der Multiplikation von Polynomen auf mindestens zwei Datenverarbeitungsstufen der Vorrichtung, wobei mindestens eine Datenverarbeitungsstufe angeordnet ist, um einen Eingangsoperanden zur Durchführung der Multiplikation zu empfangen, und mindestens eine Datenverarbeitungsstufe angeordnet ist, dass sie ein Ausgangssignal der Multiplikation bereitzustellen,
    - Definieren eines oder mehrerer Parameter für jede Datenverarbeitungsstufe, die sich auf die Darstellung von in dieser Datenverarbeitungsstufe zu verarbeitenden Daten beziehen,
    - Definieren einer oder mehrerer Beschränkungen für das Ausgangssignal, **gekennzeichnet durch**
    - Bestimmen für jede Datenverarbeitungsstufe einzeln eines Wertes für den einen oder mehrere Parameter, wobei die Beschränkungen berücksichtigt werden,
    - Anwenden der bestimmten Werte für den einen oder mehrere Parameter in jeder der Datenverarbeitungsstufen der Vorrichtung zum Durchführen der Multiplikation von Polynomen in der kryptographischen Anwendung.

2.  Verfahren zum Entwerfen einer Vorrichtung nach Anspruch 1, wobei der Eingangsoperand ein Vektor von Polynomen ist.

3.  Verfahren zum Entwerfen einer Vorrichtung nach Anspruch 1 oder 2, wobei der eine oder mehrere Parameter eines oder mehr umfasst von {Bit-Breite, Dynamikbereich, Größe des ganzzahligen Teils, Größe des Bruchteils, Stelle des Dezimaltrennzeichens}.

**4.** Verfahren zum Entwerfen einer Vorrichtung nach einem der vorstehenden Ansprüche, wobei die Vorrichtung neu konfigurierbar ist.

**5.** Verfahren zum Entwerfen einer Vorrichtung nach einem der vorstehenden Ansprüche, umfassend einen Schritt zum Aufteilen der Multiplikation in eine Vielzahl von Teilaufgaben, wodurch jede Datenverarbeitungsstufe mindestens eine Teilaufgabe ausführt.

**6.** Verfahren zum Entwerfen einer Vorrichtung nach einem der vorstehenden Ansprüche, wobei die Vorrichtung eine Architektur aufweist, die eine Vielzahl von aufeinanderfolgenden Stufen umfasst, die eine Rohrleitung bilden.

**7.** Verfahren zum Entwerfen einer Vorrichtung nach Anspruch 6, wobei die Vorrichtung in einem feldprogrammierbaren Gate-Array angewendet wird.

**8.** Verfahren zum Entwerfen einer Vorrichtung nach einem der vorstehenden Ansprüche, wobei ein maximaler Rauschpegel als eine der Beschränkungen angenommen wird.

**9.** Verfahren zum Entwerfen einer Vorrichtung nach einem der vorstehenden Ansprüche, wobei die Multiplikation von Polynomen Teil eines vollständig homomorphen Verschlüsselungsschemas ist.

**10.** Verfahren zum Entwerfen einer Vorrichtung nach einem der vorstehenden Ansprüche, wobei der Schritt zum Bestimmen des Wertes für den einen oder die mehreren Parameter für jede Datenverarbeitungsstufe einzeln mittels Simulationen durchgeführt wird.

**11.** Verfahren zum Entwerfen einer Vorrichtung nach einem der Ansprüche 1 bis 9, wobei der Schritt zum Bestimmen des Wertes für jede Datenverarbeitungsstufe einzeln durch Bestimmen einer oder mehrerer Eigenschaften der zu verarbeitenden Daten basierend auf einem Modell von Rauschquellen, welche die eine oder mehrere Beschränkungen der einen oder mehreren Eigenschaften beeinflussen, und/oder auf mindestens einer Eigenschaft einer Eingabe für eine Teilaufgabe der Datenverarbeitungsstufe durchgeführt wird.

**12.** Verfahren zum Entwerfen einer Vorrichtung nach Anspruch 11, wobei eine Rauschquelle aus dem Entfernen von Bits auf der niederwertigsten Bitseite einer Eingabe einer Teilaufgabe der Datenverarbeitungsstufe stammt.

**13.** Verfahren zum Entwerfen einer Vorrichtung nach Anspruch 11 oder 12, wobei eine Rauschquelle aus dem Weglassen von Bits auf der höchstwertigen Bitseite der Eingabe einer Teilaufgabe der Datenverarbeitungsstufe stammt.

**14.** Verfahren zum Entwerfen einer Vorrichtung nach einem der vorstehenden Ansprüche, wobei die Multiplikation von Polynomen unter Verwendung einer negazyklischen Faltung durchgeführt wird.

**15.** Verfahren zum Entwerfen einer Vorrichtung nach einem der vorstehenden Ansprüche, wobei die Darstellung von Daten eine Festkommadarstellung ist.

**Revendications**

**1.** Procédé de conception d'un dispositif destiné à effectuer une multiplication de polynômes dans une application cryptographique, le procédé comprenant :

• répartir l'exécution de ladite multiplication de polynômes sur au moins deux étages de traitement de données dudit dispositif, dans lequel au moins un étage de traitement de données est agencé pour recevoir un opérande d'entrée afin d'effectuer ladite multiplication et au moins un étage de traitement de données est agencé pour fournir un signal de sortie de ladite multiplication,
• définir, pour chaque étage de traitement de données, un ou plusieurs paramètres relatifs à la représentation des données à traiter dans cet étage de traitement de données,
• définir une ou plusieurs contraintes pour ledit signal de sortie, **caractérisé par** :

• déterminer, pour chaque étage de traitement de données individuellement, une valeur pour lesdits un ou plusieurs paramètres, moyennant quoi lesdites une ou plusieurs contraintes sont prises en compte,
• appliquer les valeurs déterminées pour lesdits un ou plusieurs paramètres dans chacun desdits étages de traitement de données dans ledit dispositif pour effectuer ladite multiplication de polynômes dans ladite application cryptographique.

2.  Procédé de conception d'un dispositif selon la revendication 1, dans lequel ledit opérande d'entrée est un vecteur de polynômes.

3.  Procédé de conception d'un dispositif selon la revendication 1 ou 2, dans lequel lesdits un ou plusieurs paramètres comprennent un ou plusieurs parmi {largeur de bits, plage dynamique, taille de la partie entière, taille de la partie fractionnaire, emplacement de la virgule décimale}.

4.  Procédé de conception d'un dispositif selon l'une quelconque des revendications précédentes, dans lequel ledit dispositif est reconfigurable.

5.  Procédé de conception d'un dispositif selon l'une quelconque des revendications précédentes, comprenant une étape de fractionnement de ladite multiplication en une pluralité de sous-tâches, moyennant quoi chaque étage de traitement de données exécute au moins une sous-tâche.

6.  Procédé de conception d'un dispositif selon l'une quelconque des revendications précédentes, dans lequel ledit dispositif présente une architecture comprenant une pluralité d'étages consécutifs formant un pipeline.

7.  Procédé de conception d'un dispositif selon la revendication 6, dans lequel ledit dispositif est mis en œuvre dans un réseau de portes programmable.

8.  Procédé de conception d'un dispositif selon l'une quelconque des revendications précédentes, dans lequel un niveau de bruit maximal est pris comme l'une desdites contraintes.

9.  Procédé de conception d'un dispositif selon l'une quelconque des revendications précédentes, dans lequel ladite multiplication de polynômes fait partie d'un schéma de chiffrement entièrement homomorphe.

10. Procédé de conception d'un dispositif selon l'une quelconque des revendications précédentes, dans lequel ladite étape de détermination, pour chaque étage de traitement de données individuellement, de ladite valeur pour lesdits un ou plusieurs paramètres est effectuée au moyen de simulations.

11. Procédé de conception d'un dispositif selon l'une quelconque des revendications 1 à 9, dans lequel ladite étape de détermination, pour chaque étage de traitement de données individuellement, de ladite valeur est effectuée en déterminant une ou plusieurs propriétés desdites données à traiter sur la base d'un modèle de sources de bruit affectant lesdites une ou plusieurs contraintes sur lesdites une ou plusieurs propriétés et/ou sur au moins une propriété d'une entrée d'une sous-tâche de l'étage de traitement de données.

12. Procédé de conception d'un dispositif selon la revendication 11, dans lequel une source de bruit provient de la suppression de bits du côté du bit de poids faible d'une entrée d'une sous-tâche dudit étage de traitement de données.

13. Procédé de conception d'un dispositif selon la revendication 11 ou 12, dans lequel une source de bruit provient de l'élimination de bits du côté du bit de poids fort de ladite entrée d'une sous-tâche dudit étage de traitement de données.

14. Procédé de conception d'un dispositif selon l'une quelconque des revendications précédentes, dans lequel ladite multiplication de polynômes est effectuée en utilisant une convolution néga-cyclique.

15. Procédé de conception d'un dispositif selon l'une quelconque des revendications précédentes, dans lequel ladite représentation de données est une représentation en virgule fixe.

**Fig.1**

**Fig.2**

Fig.3

Fig.4

Fig.5

**Fig.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. DUCAS et al.** FHEW: Bootstrapping homomorphic encryption in less than a second''. *Eurocrypt*, 2015, 617-640
- **I. CHILLOTTI et al.** TFHE: Fast Fully Homomorphic Encryption Over the Torus''. *J.Cryptol.*, 2020, vol. 33, 34-91

- **L. JIANG et al.** MATCHA: A Fast and Energy-Efficient Accelerator for Fully Homomorphic Encryption over the Torus''. *59th Annual Design Automation Conference 2022, July '22, prepublished on the Internet on*, 17 February 2022